(19)

Europäisches
Patentamt
European
Patent Office
Office européen
des brevets

(11) **EP 2 400 451 A1**

(12) **EUROPEAN PATENT APPLICATION**

(43) Date of publication:
**28.12.2011 Bulletin 2011/52**

(51) Int Cl.:
***G06Q 30/00*** *(2006.01)*

(21) Application number: **11168602.8**

(22) Date of filing: **02.06.2011**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **24.06.2010 JP 2010143513** | (71) Applicant: **Sony Corporation<br>Tokyo 108-0075 (JP)**<br><br>(72) Inventor: **Yamada, Yasuhiro<br>Minato-ku, Tokyo 108-0075 (JP)**<br><br>(74) Representative: **Turner, James Arthur<br>D Young & Co LLP<br>120 Holborn<br>London EC1N 2DY (GB)** |

(54) **Advertising effectiveness measuring apparatus, advertising effectiveness measuring method, program, and electronic advertising apparatus**

(57)     Disclosed herein is an advertising effectiveness measuring apparatus, including: a display information acquisition portion configured to acquire display information representing whether or not an advertising content of a predetermined product was displayed in each of unit time slots; a purchaser information acquisition portion configured to acquire purchaser information representing the number of purchasers who bought the predetermined product in each of the unit time slots; and an indicator calculation portion configured to calculate an advertising effectiveness indicator representing the effectiveness of the advertising carried out by displaying the advertising content of the predetermined product, based on the display information acquired by the display information acquisition portion and on the purchaser information acquired by the purchaser information acquisition portion.

FIG.1

EP 2 400 451 A1

**Description**

The present disclosure relates to an advertising effectiveness measuring apparatus, an advertising effectiveness measuring method, a program, and an electronic advertising apparatus.

There exist electronic advertising apparatuses that advertise a predetermined product to potential purchasers by displaying product information about the product (the name as well as photos, a still image, a moving image, etc., of the product) on a display device. Also, as described in Japanese Patent Laid-open No. 2000-209578 (called the Patent Document 1 hereunder), apparatuses have been conceived to evaluate the effectiveness of such electronic advertising. It should be noted that the product in the current context includes services. This holds throughout the description that follows.

The evaluation apparatus described in the Patent Document 1 is structured to calculate evaluation values each representing the degree to which the product information (advertising media) displayed on the display device is viewed, through the use of a video camera and image analysis software. The evaluation value thus calculated is not directly associated with the number of purchasers who actually bought the product of interest. Such evaluation values may not adequately represent the effectiveness of the advertising to potential purchasers carried out by having product information displayed on the display device.

The present disclosure has been made in view of the above circumstances and provides an advertising effectiveness measuring apparatus, an advertising effectiveness measuring method, a program, and an electronic advertising apparatus for suitably evaluating the advertising effectiveness brought about by displays of advertising contents.

Various respective aspects and features of the invention are defined in the appended claims. Combinations of features from the dependent claims may be combined with features of the independent claims as appropriate and not merely as explicitly set out in the claims.

Embodiments of the invention can relate to an advertising effectiveness measuring apparatus, an advertising effectiveness measuring method, a program, and an electronic advertising apparatus for measuring the advertising effectiveness brought about by displays of advertising contents.

According to one embodiment of the present disclosure, there is provided an advertising effectiveness measuring apparatus including: a display information acquisition portion configured to acquire display information representing whether or not an advertising content of a predetermined product was displayed in each of unit time slots; a purchaser information acquisition portion configured to acquire purchaser information representing the number of purchasers who bought the predetermined product in each of the unit time slots; and an indicator calculation portion configured to calculate an advertising effectiveness indicator representing the effectiveness of the advertising carried out by displaying the advertising content of the predetermined product, based on the display information acquired by the display information acquisition portion and on the purchaser information acquired by the purchaser information acquisition portion.

In the above-outlined structure, the display information acquisition portion acquires the display information representing whether or not the advertising content of a predetermined product was displayed in each of the unit time slots. The time slot may be in units of a day, an hour, or a minute. Also, the purchaser information acquisition portion acquires the purchaser information representing the number of purchasers who bought the predetermined product in each of the unit time slots.

It should be noted that each unit time slot for the display information need not fully coincide with each unit time slot for the purchaser information. For example, in consideration of a delay time that may elapse from the time a person views the displayed advertising content of a given product until that person becomes a purchaser actually buying the product in question, both the start time and the end time or only the end time of each unit time slot in the purchaser count information may be moved backward by a predetermined time period relative to each unit time slot in the display information.

The indicator calculation portion calculates the advertising effectiveness indicator representing the effectiveness of the advertising carried out by displaying the advertising content of the predetermined product. In this case, the advertising effectiveness indicator is calculated based on the display information acquired by the display information acquisition portion and on the purchaser information acquired by the purchaser information acquisition portion. For example, the indicator calculation portion may calculate as the advertising effectiveness indicator the difference between an average of the number of purchasers in each of the unit time slots in which the advertising content of the predetermined product was displayed on the one hand, and an average of the number of purchasers in each of the unit time slots in which the advertising content of the predetermined product was not displayed on the other hand.

As outlined above, the disclosed advertising effectiveness measuring apparatus calculates the advertising effectiveness indicator based on the display information representing whether or not the advertising content of the predetermined product was displayed in each of the unit time slots and on the purchaser information representing the number of purchasers who bought the predetermined product in each of the unit time slots. The advertising effectiveness indicator is thus directly associated with the number of purchaser who actually bought the product. This makes it possible to acquire an evaluation value representing appropriately the effectiveness of the advertising carried out by displaying the advertising content.

Preferably, the disclosed advertising effectiveness measuring apparatus may further include an attribute information acquisition portion configured to acquire attribute information about the purchasers who bought the predetermined product; wherein the indicator calculation portion may calculate the advertising effectiveness indicator regarding a predetermined attribute of the purchasers based on the attribute information acquired by the attribute information acquisition portion. With this structure, the attribute information about the purchasers may be information about their gender, their ages, etc. This structure makes it possible to acquire, for each attribute of the purchasers, an evaluation value representing appropriately the effectiveness of the advertising carried out by displaying the advertising content.

Preferably, the display information acquisition portion may acquire the display information about the advertising contents for a plurality of products that share the same unit time slot in which the advertising contents are displayed; wherein the purchaser information acquisition portion may acquire as the purchaser information the information about the purchasers who bought the plurality of products; and based on the display information acquired by the display information acquisition portion regarding the plurality of products and on the purchaser information acquired by the purchaser information acquisition portion regarding the plurality of products, the indicator calculation portion may calculate the advertising effectiveness indicator for each of the plurality of products, before calculating an average of the calculated advertising effectiveness indicators regarding the plurality of products. With this structure, if there is a difference in display time between the advertising contents for the plurality of products, the indicator calculation portion may acquire as the average a weighted average by weighting the advertising effectiveness indicator regarding each of the plurality of products in accordance with the display time of the advertising content for the product in question. In this case, it is possible to acquire not the evaluation value for each product but an evaluation value representing appropriately the effectiveness of the advertising carried out by displaying the advertising content in, say, each different advertisement display location.

According to another embodiment of the present disclosure, there is provided an electronic advertising apparatus including: a display control block configured to display an advertising content of a predetermined product in a predetermined time slot; and an advertising effectiveness measurement block configured to acquire an advertising effectiveness indicator representing the effectiveness of the advertising carried out by displaying the advertising content of the predetermined product. The advertising effectiveness measurement block includes: a display information acquisition portion configured to acquire display information representing whether or not an advertising content of a predetermined product was displayed in each of short time slots making up each of unit time slots constituting the predetermined time slot; a purchaser information acquisition portion configured to acquire purchaser information representing the number of purchasers who bought the predetermined product in each of the short time slots; and an indicator calculation portion configured to calculate the advertising effectiveness indicator representing the effectiveness of the advertising carried out by displaying the advertising content of the predetermined product, with regard to each of the unit time slots constituting the predetermined time slot on the basis of the display information acquired by the display information acquisition portion and the purchaser information acquired by the purchaser information acquisition portion. The display control block controls the number of times the advertising content of the product is displayed in each of the unit time slots, with regard to either the predetermined time slot or a time slot corresponding to the predetermined time slot on the basis of the advertising effectiveness indicator acquired by the advertising effectiveness measurement block.

The disclosed electronic advertising apparatus outlined above includes the display control block and advertising effectiveness measurement block. The display control block displays the advertising content of the predetermined product in the predetermined time slot. The advertising effectiveness measurement block acquires the advertising effectiveness indicator representing the effectiveness of the advertising carried out by displaying the advertising content of the predetermined product.

The advertising effectiveness measurement block includes the display information acquisition portion, purchaser information acquisition portion and indicator calculation portion, and thereby acquires the advertising effectiveness indicator representing the effectiveness of the advertising carried out by displaying the advertising content of the predetermined product with regard to each of the unit time slots constituting the predetermined time slot. This advertising effectiveness indicator is directly associated with the number of purchasers who actually bought the product. As such, the advertising effectiveness indicator is an evaluation value that represents appropriately the effectiveness of the advertising carried out by displaying the advertising content.

The display control block controls the number of times the advertising content of the product is displayed in each of the unit time slots with regard to either the predetermined time slot or a time slot corresponding to the predetermined time slot on the basis of the advertising effectiveness indicator acquired by the advertising effectiveness measurement block. For example, the predetermined time slot may be a certain hour of a certain day of the week, or a certain hour in the morning. Typically, if the predetermined time slot is a certain hour of a certain day of the week, the time slot corresponding to the predetermined time slot may be the same hour of the same day of the week; if the predetermined time slot is a certain hour in the morning, then the time slot corresponding to the predetermined time slot may be the same hour in the morning of every day.

As outlined above, the disclosed electronic advertising apparatus controls the number of times the advertising content of the predetermined product is displayed in each of the unit time slots with regard to either the predetermined time slot or the time slot corresponding to the predetermined time slot, by use of the evaluation value (i.e., advertising effectiveness indicator) representing appropriately the effectiveness of the advertising carried out by displaying the advertising content. This structure makes it possible to optimize the number of times the advertising content of the predetermined product is displayed in each of the unit time slots with regard to either the predetermined time slot or the time slot corresponding to the predetermined time slot.

According to a further embodiment of the present disclosure, there is provided an electronic advertising apparatus including: a display control block configured to display advertising contents of a plurality of products in a predetermined unit time slot; and an advertising effectiveness measurement block configured to acquire for each of the products an advertising effectiveness indicator representing the effectiveness of the advertising carried out by displaying the advertising contents. The advertising effectiveness measurement block includes: a display information acquisition portion configured to acquire display information representing whether or not the advertising contents of the plurality of products were displayed in each of unit time slots; a purchaser information acquisition portion configured to acquire purchaser information representing the number of purchasers who bought the plurality of products in each of the unit time slots; and an indicator calculation portion configured to calculate the advertising effectiveness indicator representing the effectiveness of the advertising carried out by displaying the advertising contents, with regard to each of the products on the basis of the display information acquired by the display information acquisition portion and the purchaser information acquired by the purchaser information acquisition portion, the indicator calculation portion further calculating the advertising effectiveness indicator for each of attributes of the products based on the advertising effectiveness indicator regarding each of the products. The electronic advertising apparatus further includes an advertising content recording block configured to record a predetermined number of advertising contents. The display control block displays a predetermined number of advertising contents which correspond to a predetermined product attribute and which are extracted from the advertising content recording block based on the advertising effectiveness indicator acquired by the advertising effectiveness measurement block regarding each of the product attributes, the predetermined number of advertising contents being displayed in the unit time slot in which the advertising contents of the plurality of products are to be displayed.

The disclosed electronic advertising apparatus outlined above includes the display control block and advertising effectiveness measurement block. The display control block displays the advertising contents of the plurality of products in the predetermined unit time slot. The advertising effectiveness measurement block acquires the advertising effectiveness indicator representing the effectiveness of the advertising carried out by displaying the advertising content of the predetermined product in the predetermined unit time slot.

The advertising effectiveness measurement block includes the display information acquisition portion, purchaser information acquisition portion, and indicator calculation portion. Thus structured, the advertising effectiveness measurement block acquires the advertising effectiveness indicator representing the effectiveness of the advertising carried out by displaying the advertising content for each product. This advertising effectiveness indicator is directly associated with the number of purchasers who actually bought the product. As such, the advertising effectiveness indicator is an evaluation value that represents appropriately the effectiveness of the advertising carried out by displaying the advertising content.

The disclosed electronic advertising apparatus further includes the advertising content recording block. The predetermined number of advertising contents corresponding to the product attribute for which the advertising was found effective are extracted from the advertising content recording block based on the advertising effectiveness indicator acquired by the advertising effectiveness measurement block regarding each product. The extracted advertising contents are displayed by the display control block in the predetermined time slot or the time slot corresponding to that predetermined time slot.

In the current context, the product attributes may typically refer to toys, clothing (for kids, women, men, etc.), foodstuffs (sweets, drinks, vegetables, meats, etc.), and house wares. The advertising contents corresponding to product attributes may typically refer to the advertising contents for the products sharing the same attribute as, say, toys, or the advertising contents for the products as toys sharing some other attribute and targeted for kids who are the purchasers of the toys.

According to the disclosure outlined above, the advertising content corresponding to the product attribute for which the advertising was found effective is extracted, and the extracted advertising content is displayed in the display unit time slot. This structure makes it possible to carry out effective advertising by taking advantage of, say, a vacant time that may occur in the display unit time slot.

Preferably, the disclosed electronic advertising apparatus may further include a user selection block configured to select desired advertising contents from the predetermined number of advertising contents extracted by the display control block from the advertising content recording block; wherein the display control block may display the advertising contents selected by the user selection block in the display unit time slot. In this case, the administrator of electronic advertising can selectively display only those advertising contents that are deemed appropriate.

According to the above-outlined disclosure, it is possible to acquire the evaluation value that represents appropriately the effectiveness of the advertising carried out by displaying the advertising content, i.e., the advertising effectiveness indicator associated with the number of purchasers who actually bought the advertised product. Also according to the disclosure, it is possible to optimize the number of times the advertising content of the predetermined product is to be displayed. Furthermore, it is possible to display the advertising content effectively by taking advantage of a vacant time that may occur.

Embodiments of the invention will now be described with reference to the accompanying drawings, throughout which like parts are referred to by like references, and in which:

Fig. 1 is a block diagram showing a system configuration as a first embodiment of the present disclosure;

Fig. 2 is a schematic view showing an example of display information and purchaser information used by a recognition rate calculation server calculating an advertising effectiveness indicator;

Fig. 3 is a schematic view showing another example of the display information and purchaser information used by the recognition rate calculation server calculating the advertising effectiveness indicator;

Fig. 4 is a block diagram showing a system configuration as a second embodiment of the present disclosure;

Figs. 5A and 5B are graphic representations explanatory of an optimization process performed by a programming management server optimizing the number of times the advertising content of the product of interest is to be displayed on the basis of the advertising effectiveness indicator in each of unit time slots;

Fig. 6 is a schematic view summarizing the workings of system components during the process of optimizing the number of times the advertising content is to be displayed;

Fig. 7 is a block diagram showing a system configuration as a third embodiment of the present disclosure;

Fig. 8 is a flowchart explanatory of a series of steps in which effective advertising contents are automatically selected and displayed in a unit time slot;

Fig. 9 is a schematic view summarizing the series of steps in which the effective advertising contents are automatically selected and displayed in the unit time slot; and

Fig. 10 is a schematic view summarizing another series of steps in which effective advertising contents are automatically selected and displayed in the unit time slot.

Some preferred embodiments of the present disclosure will now be described. The description will be given under the following headings.

**1.** First embodiment
2. Second embodiment
3. Third embodiment
4. Variations

<1. First embodiment>

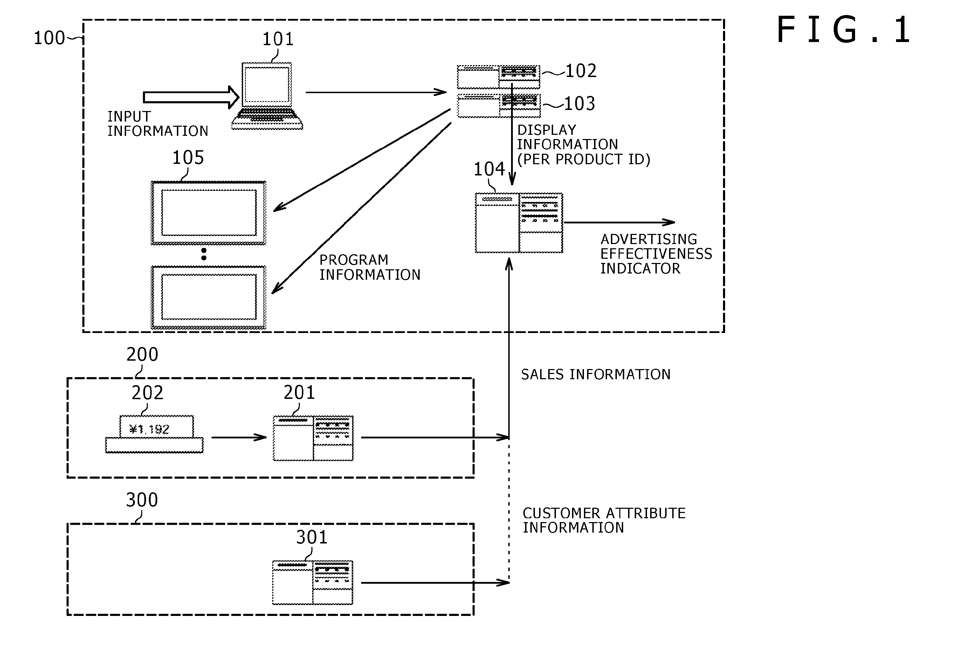

Fig. 1 shows a system configuration implemented as the first embodiment of the present disclosure. The first embodiment includes a signage system (electronic advertising distribution and display system) 100 and a POS system (point-of-sale management system) 200. The first embodiment further includes a CRM system (customer relationship management system) 300.

The signage system 100 has an input terminal 101, a programming management server 102, a distribution server 103, a recognition rate calculation server 104, and a display device 105. The input terminal 101 is a terminal through which the user inputs such information as production information and display information. The product information includes product names, product images (still or moving images), product ID's (product identifiers), and product prices. The product ID may be JAN (Japanese Article Number) code, for example.

Based on the product information input from the input terminal 101, the programming management server 102 puts advertising contents (image data and audio data) into storage (not shown). Also, on the basis of the display times input from the input terminal 101, the programming management server 102 creates play lists in which the advertising contents are programmed for time slots and places the created play lists into the storage.

The distribution server 103 distributes program information to one or a plurality of display devices 105. The program information includes the play lists created by the programming management server 102 and placed into the storage, as well as the advertising contents referenced in these play lists.

The display device 105 is furnished with a set-top box (not shown) for reception purposes. Using the set-top box, the display device 105 receives the program information sent from the distribution server 103. The display device 105 and distribution server 103 may be connected by, say, a network such as a LAN (local area network), not shown.

The set-top box reproduces the advertising contents successively based on the play lists for display on the display device 105. Although the advertising content includes audio data in addition to image data, the audio data will not be discussed hereunder for purpose of simplification and illustration.

The recognition rate calculation server 104 calculates advertising effectiveness indicators based on the display information about the advertising content for each product identified by a product ID, on sales information coming from the POS system 200, and on customer attribute information provided by the CRM system 300, among others. The recognition rate calculation server 104 may alternatively acquire the display information from the programming management server 102 as illustrated in Fig. 1 or by way of the display device 105. The recognition rate calculation server 104 constitutes a display information acquisition portion, a purchaser information acquisition portion, and an indicator calculation portion.

The POS system 200 includes a POS server 201 and a checkout terminal 202. The POS server 201 may be connected to the recognition rate calculation server 104 of the signage system 100 via a network (not shown), for example. Through the network, the POS server 201 sends the above-mentioned sales information to the recognition rate calculation server 104. The sales information includes information about the sales time for each product identified by a product ID, the number of products sold, and the number of purchasers who bought the products.

The CRM system 300 includes a CRM server 301. The CRM server 301 may be connected to the recognition rate calculation server 104 of the signage system 100 via a network (not shown), for example. Through the network, the CRM server 301 sends the above-mentioned customer attribute information to the recognition rate calculation server 104. The customer attribute information includes gender information (male/female distinctions) and age information or the like.

[Examples of how to calculate the advertising effectiveness indicator]

Explained below are three examples (the first through the third) of how the advertising effectiveness indicator may be calculated.

[First example: how to calculate the advertising effectiveness indicator]

(1) The user of the signage system 100 wising to display advertising contents inputs product information (e.g., product names, product images (still or moving images), product ID's, product prices), display times, etc., through the use of the input terminal 101.

(2) Based on the product information coming from the input terminal 101, the programming management server 102 creates the advertising contents for advertising the products of interest and places the created contents into the storage (not shown). Also, on the basis of the display times input from the input terminal 101, the programming management server 102 creates a play list in which the advertising contents are programmed for time slots and places the created play list into the storage.

(3) The distribution server 103 distributes to the set-top box (not shown) of the display device 105 the play list created by the programming management server 102 and placed in the storage as well as the program information including the advertising contents referenced in the play list in question. Based on the play list, the set-top box reproduces the advertising contents one after another for display on the display device 105.

(4) For each of the products identified by their product ID's, the programming management server 102 or display device 105 (set-top box) transmits to the recognition rate calculation server 104 the display information representing whether or not the advertising contents are to be displayed in each unit time slot. In this case, the unit time slot may be a day, an hour, or a minute.

(5) For each of the products identified by their product ID's, the POS server 201 transmits purchaser count information representing the number of purchasers per unit time slot mentioned above to the recognition rate calculation server 104. Each unit time slot in the display information need not coincide with each unit time slot in the purchaser count information. This is to take into consideration a delay time that may elapse from the time people watch the advertising content of a given content on the display device 105 until these people become purchasers who actually bought the product in question. For example, both the start time and the end time or only the end time of each unit time slot in the purchaser count information may be moved backward by a predetermined time period relative to each unit time slot in the display information.

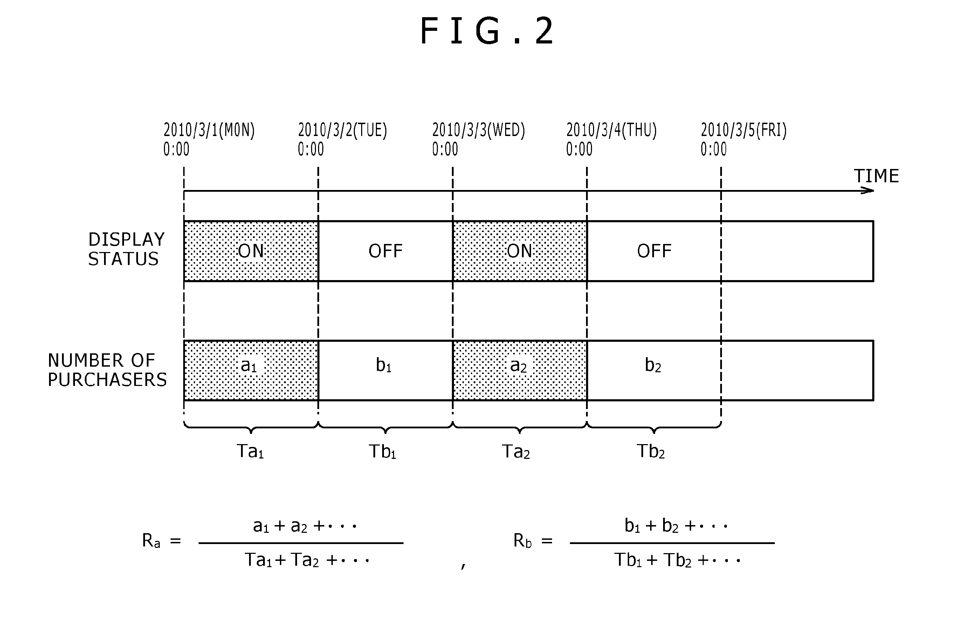

(6) For each product, the recognition rate calculation server 104 retains display on/off status of advertising contents in unit time slots Tal, Tb1, Ta2, Tb2, ..., and the number of purchasers who bought the product of interest in each unit time slot, as shown illustratively in Fig. 2. The recognition rate calculation server 104 calculates an advertising-on purchase rate Ra (people/time) using the expression (1) shown below and an advertising-off purchase rate Rb (people/time) using the expression (2) below. As indicated by the expression (3) below, an advertising effectiveness indicator R is calculated by subtracting the advertising-off purchase rate Rb (people/time) from the advertising-on purchase rate Ra (people/time).

$$Ra = (a1 + a2 + ...)/(Ta1 + Ta2 + ...) \qquad ... (1)$$

$$Rb = (b1 + b2 + ...)/(Tb1 + Tb2 + ...) \qquad ... (2)$$

$$R = Ra - Rb \qquad ... (3)$$

[Second example: how to calculate the advertising effectiveness indicator for each attribute of purchasers]

(1) The user of the signage system 100 wising to display advertising contents inputs product information (e.g., product names, product images (still or moving images), product ID's, product prices), display times, etc., through the use of the input terminal 101.

(2) Based on the product information coming from the input terminal 101, the programming management server 102 creates the advertising contents for advertising the products of interest and places the created contents into the storage (not shown). Also, on the basis of the display times input from the input terminal 101, the programming management server 102 creates a play list in which the advertising contents are programmed for time slots and places the created play list into the storage.

(3) The distribution server 103 distributes to the set-top box (not shown) of the display device 105 the play list created by the programming management server 102 and placed in the storage as well as the program information including the advertising contents referenced in the play list in question. Based on the play list, the set-top box reproduces the advertising contents one after another for display on the display device 105.

(4) For each of the products identified by their product ID's, the programming management server 102 or display device 105 (set-top box) transmits to the recognition rate calculation server 104 the display information representing whether or not the advertising contents are to be displayed in each unit time slot. In this case, the unit time slot may be a day, an hour, or a minute.

(5) For each of the products identified by their product ID's, the POS server 201 transmits purchaser count information representing the number of purchasers per unit time slot mentioned above to the recognition rate calculation server 104. As explained above in connection with the first embodiment, each unit time slot in the display information need not coincide with each unit time slot in the purchaser count information. Meanwhile, the CRM server 301 transmits the customer attribute information about the purchasers who bought the products to the recognition rate calculation server 104.

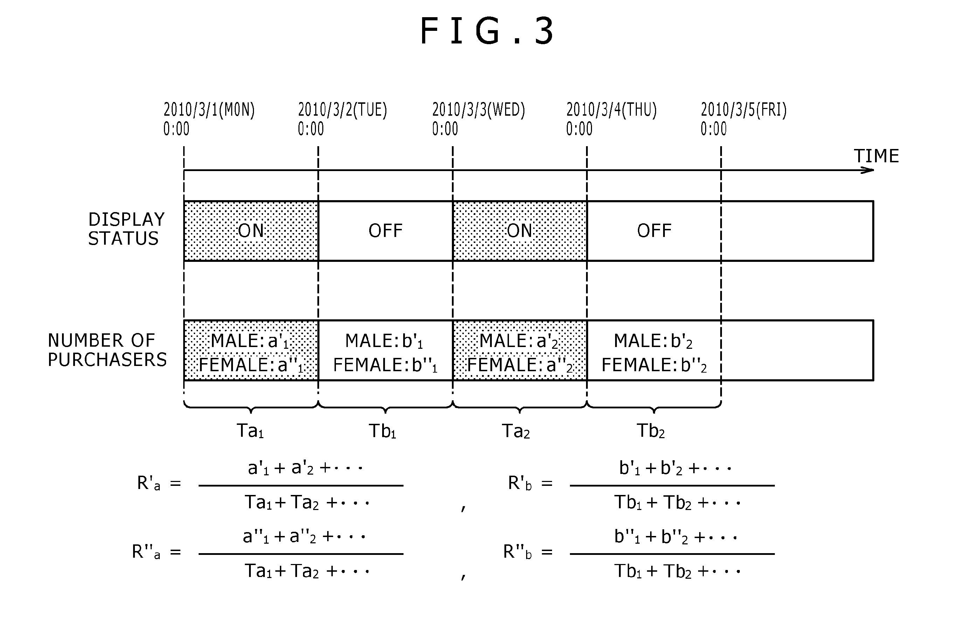

(6) For each product, the recognition rate calculation server 104 may possess data about the display on/off status of advertising contents in unit time slots Tal, Tb1, Ta2, Tb2, ..., and data about the number, by attribute, of the purchasers who bought the product in question, as shown illustratively in Fig. 3. For purpose of explanation, it is assumed that there are attributes 1 and 2; that in the time slots in which display is on, the purchasers with attribute 1 are denoted by a'1, a'2, etc., and those with attribute 2 are represented by a"1, a"2, etc.; and that in the time slots in which display is off, the purchasers with attribute 1 are indicated by b'1, b'2, etc., and those with attribute 2 are identified by b"1, b"2, etc.

The recognition rate calculation server 104 calculates an advertising-on purchase rate R'a (people/time) for attribute 1 using the expression (4) shown below and an advertising-off purchase rate R'b (people/time) also for attribute 1 using the expression (5) below. As indicated by the expression (6) below, an advertising effectiveness indicator R' in the advertising-on time slots is calculated by subtracting the advertising-off purchase rate R'b (people/time) from the advertising-on purchase rate R'a (people/time).

$$R'a = (a'1 + a'2 + ...)/(Ta1 + Ta2 + ...) \qquad ... (4)$$

$$R'b = (b'1 + b'2 + ...)/(Tb1 + Tb2 + ...) \qquad ... (5)$$

$$R' = R'a - R'b \qquad ... (6)$$

Furthermore, the recognition rate calculation server 104 calculates an advertising-on purchase rate R"a (people/time) for attribute 2 using the expression (7) shown below and an advertising-off purchase rate R"b (people/time) also for attribute 2 using the expression (8) below. As indicated by the expression (9) below, an advertising effectiveness indicator R" in the advertising-off time slots is calculated by subtracting the advertising-off purchase rate R"b (people/time) from the advertising-on purchase rate R"a (people/time).

$$R''a = (a''1 + a''2 + ...)/(Ta1 + Ta2 + ...) \qquad ... (7)$$

$$R''b = (b''1 + b''2 + ...)/(Tb1 + Tb2 + ...) \qquad ... (8)$$

$$R'' = R''a - R''b \qquad ... (9)$$

[Third example: how to calculate the advertising effectiveness indicator in display time slots]

In the above-described first example, the advertising effectiveness indicator for each product in display time slots was shown calculated from the actual purchases of the product in question. In this third example, the advertising effectiveness indicator for products P1, P2, ... Pn in the display time slots will be shown calculated on the assumption that the display unit time slots for the advertising contents involved are common to the products in question.

That the display unit time slots for the advertising contents are common to the products P1, P2, ... Pn means that all advertising contents of all these products are displayed in certain unit times and not displayed at all in the other unit time slots. Each unit time slot in which all advertising contents of the products P1, P2, ... Pn are displayed is divided into a plurality of segments. The advertising contents of the products are then displayed in one or a plurality of divided time slot segments.

By taking steps (1) through (6) in the same manner as in the first example above, the recognition rate calculation server 104 calculates the advertising effectiveness indicators R1, R2, ... Rn for the respective products. The third example involves another step (7), to be described below.

(7) The recognition rate calculation server 104 calculates an average Rav of the advertising effectiveness indicators R1, R2, ... Rn for the respective products using the expression (10) shown below. The average Rav serves as an advertising effectiveness indicator for the display time slots involved.

$$Rav = (R1 + R2 + ... + Rn)/n \qquad ... (10)$$

If there are differences in display time among the advertising contents for the products P1, P2, ... Pn, then the recognition rate calculation server 104 calculates a weighted average Ravw using the expression (11) shown below instead of the average Rav obtained using the expression (10) above, the weighted average Ravw being acquired by taking the different display times into consideration.

$$Ravw = (R1*t1 + R2*t2 + ... + Rn*tn)/(t1 + t2 + ... + tn) \qquad ... (11)$$

where, t1, t2, ... tn denote the display times of the advertising contents for the products P1, P2, ... Pn, respectively.

In the above-described second example, the advertising effectiveness indicator for each product (per purchaser attribute) in the display time slots was shown calculated based on the actual purchases of the product in question. In this third example, if all advertising contents for all the products P1, P2, ... Pn are collectively displayed or not displayed in the same unit time slots, then the advertising effectiveness indicators in the display time slots may be calculated (per purchaser attribute).

By taking steps (1) through (6) in the same manner as in the second example above, the recognition rate calculation server 104 calculates the advertising effectiveness indicators R'1, R'2, ..., R'n as well as R"1, R"2, ..., R"n (per purchaser attribute) for the respective products. The third example further involves another step (7), to be described below.

(7) The recognition rate calculation server 104 calculates an average R'av of the advertising effectiveness indicators R'1, R'2, ..., R'n for the respective products with attribute 1 using the expression (12) shown below. The average R'av serves as an advertising effectiveness indicator (for attribute 1) of the display time slots involved.

$$R'av = (R'1 + R'2 + ... + R'n)/n \qquad ... (12)$$

Also, the recognition rate calculation server 104 calculates an average R"av of the advertising effectiveness indicators R"1, R"2, ..., R"n for the respective products with attribute 2 using the expression (13) shown below. The average R"av serves as an advertising effectiveness indicator (for attribute 2) of the display time slots involved.

$$R''av = (R''1 + R''2 + ... + R''n)/n \qquad ... (13)$$

Where the advertising effectiveness indicators (per purchaser attribute) in the display time slots are to be calculated, if there are differences in display time among the advertising contents for the products P1, P2, ... Pn, a weighted average of the indicators may be calculated by weighting the advertising effectiveness indicator of each product in accordance of the different display time thereof.

As discussed above, the recognition rate calculation server 104 of the signage system 100 calculates the advertising effectiveness indicator based on the display on/off status of the advertising content for each predetermined product in each unit time slot and on the number of purchasers who bought the product in question. It follows that the advertising effectiveness indicator is directly associated with the number of purchasers who actually bought the product. This makes it possible to obtain an evaluation value that represents appropriately the effectiveness of the advertising carried out by displaying the relevant advertising content on the display device 105.

<2. Second embodiment>

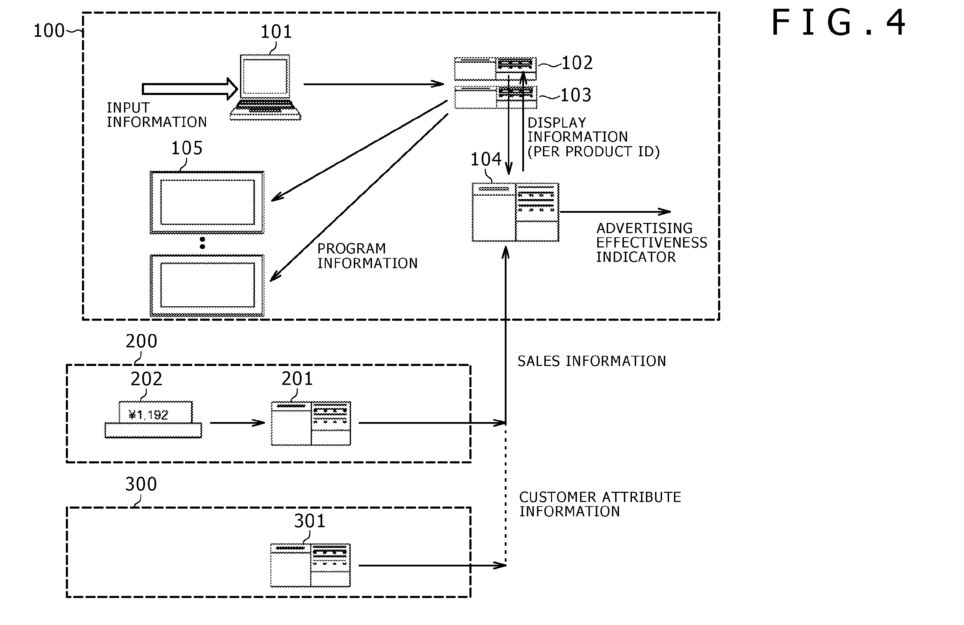

Fig. 4 shows a system configuration implemented as the second embodiment of the present disclosure. As with the system configuration of the above-described first embodiment, the second embodiment is made up of a signage system 100, a POS system 200, and a CRM system 300. In Fig. 4, the same reference numerals as those used in Fig. 1 designate like or corresponding components, and their detailed descriptions will be omitted hereunder. In the second embodiment, the signage system 100 optimizes the number of times the display content of the target product is to be displayed (i.e., display count) in each unit time slot on the basis of the advertising effectiveness indicator calculated by the recognition rate calculation server 104 for the advertising content in question.

In the system configuration of Fig. 4, the signage system 100 displays the advertising contents of a plurality of products in a predetermined time slot. The advertising contents are displayed by taking advantage of a predetermined number of short time slots in each of the unit time slots making up the predetermined time slot. In a single short unit time, the advertising contents are each displayed once. For example, the predetermined time slot may be one hour on a certain day of the week, or one hour in the morning. The typical unit time slot may be three minutes and the typical short time slot may be 15 seconds, for example.

In the same manner as in the first example of the above-described first embodiment, the recognition rate calculation server 104 calculates the advertising effectiveness indicator for each product in each unit time slot, and transmits the calculated indicators to the programming management server 102. In this case, the time slots Ta1, Ta2, etc., in the expressions (1) and (2) shown above correspond to short time slots. That is, a plurality of short time slots constituting each unit time slot include two kinds of short time slots: those in which the advertising contents of the target products are displayed, and those in which the advertising contents of the target products are not displayed.

On the basis of the advertising effectiveness indicators of a given unit time slot sent from the recognition rate calculation server 104, the programming management server 102 determines the display counts of the advertising contents for the target products in the next unit time slot. The programming management server 102 creates a new play list based on the display counts thus determined. The distribution server 103 distributes the new play list to the set-top box (not shown) of the display device 105. In keeping with the new play list, the set-top box reproduces the advertising contents one after another for display on the display device 105. In this case, the display counts of the advertising contents for the target products in the unit time slot equal the display counts determined by the programming management server 102 as described above.

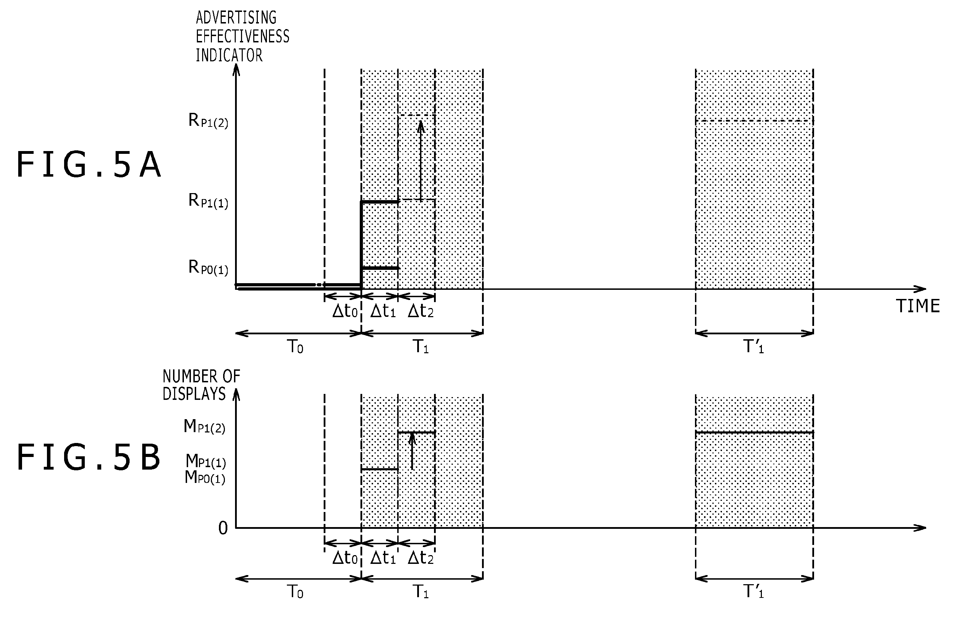

Explained below in reference to Figs. 5A and 5B is a typical optimization process performed by the programming management server 102 optimizing the display count of the advertising content for each target product on the basis of the advertising effectiveness indicators in each unit time slot. Fig. 5A shows an example of advertising effectiveness indicators RPO and RP1 transiting from one unit time slot to another, the indicators RPO and RP1 being calculated by the recognition rate calculation server 104 with regard to the displayed advertising contents of the products P0 and P1. Fig. 5B shows an example of the display counts of the advertising contents for the products P0 and P1 transiting from one unit time slot to another, the display counts being determined by the programming management server 102.

It is assumed here that in a time slot T1 following a time slot T0, the display of the advertising contents for the products P0 and P1 is started; and that the display counts of the advertising contents for the products P0 and P1 are 0 in a unit time slot $\Delta t0$ are each zero immediately before the time slot T1 and are MP0 (1) and MP1(1) respectively in a unit time slot $\Delta t1$ immediately after the time slot T1 has started. In this case, it is further assumed that the advertising effectiveness indicators for the products P0 and P1 upon elapse of the unit time slot $\Delta t1$ are RP0(1) and RP1(1), respectively.

Where the indicator RP1(1) is found higher than the indicator RP0(1) in terms of advertising effectiveness, the programming management server 102 increases the display count of the advertising content for the product P1 to MP1 (2) in the next unit time slot $\Delta t2$. The increase changes the advertising effectiveness indicator to RP1(2). When the indicator RP1(2) is found higher than the indicator RP1(1), the programming management server 102 changes the display counts of the advertising contents in the unit time slots $\Delta t1$ and $\Delta t2$ and repeats the changes until the advertising effectiveness indicators are optimized. It should be noted that if there is an upper limit to the display count of the advertising content for each product, then this upper limit governs.

As described, the display count of the advertising content for each target product in a given time slot T1 may be optimized by changing that display count through the feedback of the advertising effectiveness indicator in each unit time slot. Also, for a time slot T1' corresponding to the time slot T1, the effectiveness of advertising may be optimized using the optimal display count obtained for the time slot T1. The time slot T1' corresponding to the time slot T1 is a time slot that has an attribute similar to that of the time slot T1, such as a time slot on the same day of the week or a time slot in the same morning.

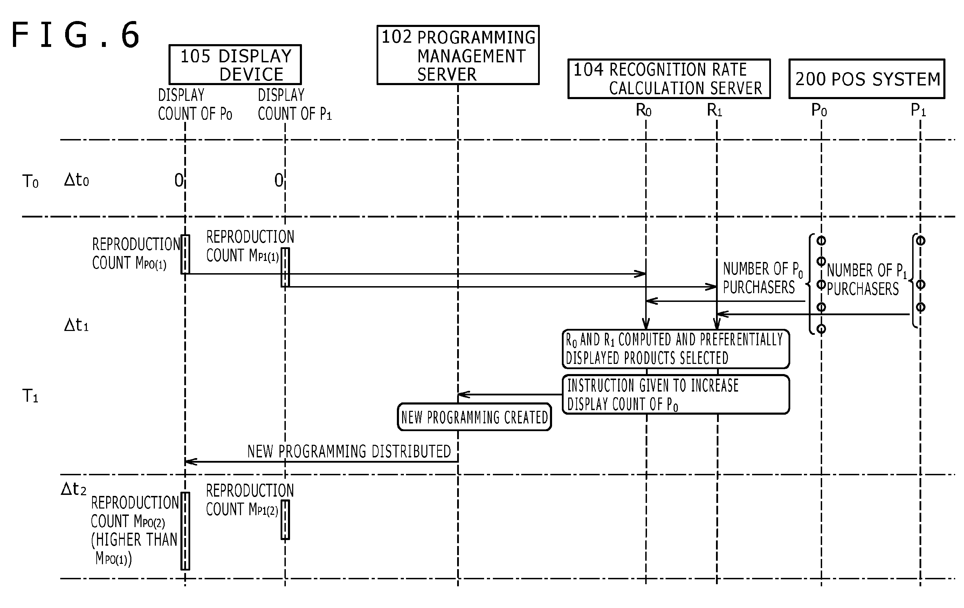

Fig. 6 summarizes the workings of the programming management server 102, recognition rate calculation server 104, display device 105 (set-top box), and POS system 200 during the above-described process of optimizing advertising content display counts.

In the system configuration of Fig. 4, as discussed above, the recognition rate calculation server 104 of the signage system 100 calculates the advertising effectiveness indicator for each product in each unit time slot of a given time slot, and transmits the calculated indicators to the programming management server 102. The programming management server 102 determines the display counts of the advertising contents for the target products in the next unit time slot based on the advertising effectiveness indicators of a given unit time slot sent from the recognition rate calculation server 104. This makes it possible to optimize the display count of the advertising contents for each predetermined product per unit time slot in a predetermined time slot or in a time slot corresponding to that predetermined time slot.

<3. Third embodiment>

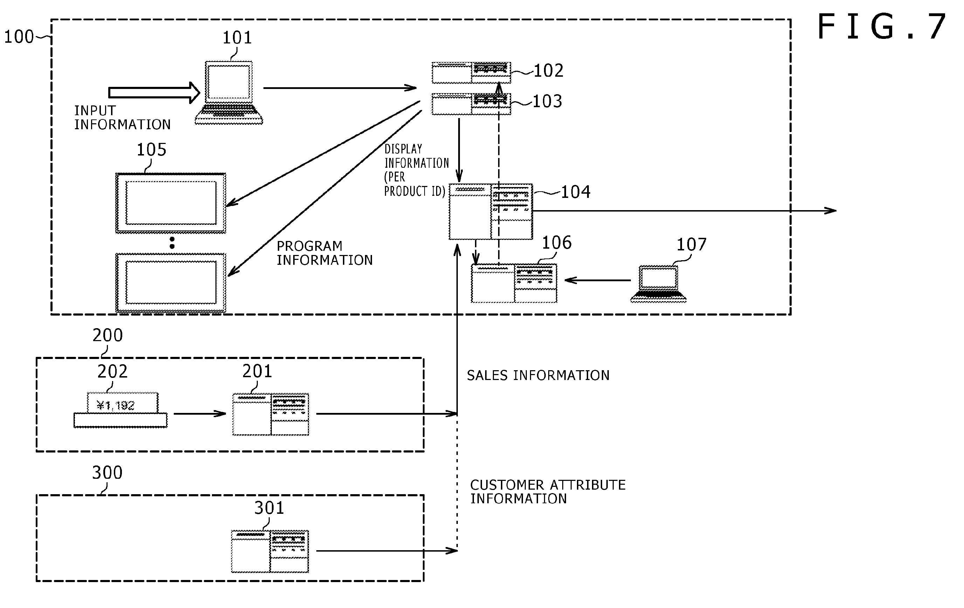

Fig. 7 shows a system configuration implemented as the third embodiment of the present disclosure. As with the first and the second embodiments, the third embodiment is made up of a signage system 100, a POS system 200, and a CRM system 300. In Fig. 7, the same reference numerals as those used in Figs. 1 and 4 designate like or corresponding components, and their detailed descriptions will be omitted hereunder. On the basis of the advertising effectiveness indicator calculated by the recognition rate calculation server 104 for each product per unit time slot, the signage system 100 of the third embodiment automatically selects the effective advertising contents for a given display time slot.

The signage system 100 also possesses an advertising archive server 106 and a content selection terminal 107. The advertising archive server 106 has a predetermined number of advertising contents recorded therein and sorted by product attribute. The advertising archive server 106 constitutes an advertising content recording block. As will be explained later, the content selection terminal 107 is used by the user to select the advertising contents desired to be displayed from among a predetermined number of advertising contents extracted from the advertising contents recorded in the advertising archive server 106.

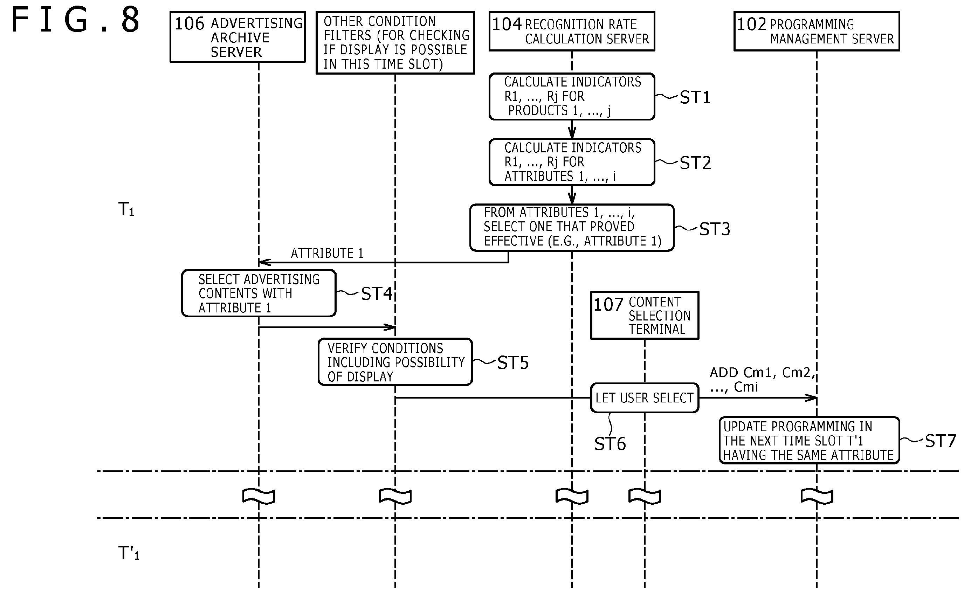

In the same manner as in the above-described first example of the first embodiment, the recognition rate calculation server 104 first calculates the advertising effectiveness indicators R1, R2, ..., Rj of products 1, 2, ..., j in a given display time slot, as shown in Fig. 8 (in step ST1). The recognition rate calculation server 104 proceeds to calculate advertising effectiveness indicators R1av, R2av, ..., Riav based on the advertising effectiveness indicators R1, R2, ..., Rj of the products sorted by attributes 1, 2, ..., i (in step ST2), as shown in Fig. 8.

Also, the recognition rate calculation server 104 compares the advertising effectiveness indicators R1av, R2av, ..., Riav that have been sorted by attribute, selects a certain number of effective attributes (typically one attribute such as attribute 1 in this case), and sends selected attribute information to the advertising archive server 106, as shown in Fig. 8. In this case, the recognition rate calculation server 104 may select the attribute corresponding to the largest (i.e., higher than a threshold value) of the advertising effectiveness indicators R1av, R2av, ..., Riav, for example.

Given the attribute information from the recognition rate calculation server 104, the advertising archive server 106 extracts a predetermined number of advertising contents corresponding to the attribute designated by the attribute information (in step ST4). The predetermined number of advertising contents are filtered by other condition filters other than those of the attributes (not shown in Fig. 4). That is, these condition filters are used to verify conditions such as whether or not the predetermined number of advertising contents extracted by the advertising archive server 106 can be displayed under constraints such as time limits (in step ST5).

Also, using the content selection terminal 107, the user selects desired advertising contents to be displayed from a certain number of advertising contents that have remain intact following the filtering by the other condition filters as described above (in step ST6). The ultimately remaining advertising contents Cm1, Cm2, ..., Cmi are sent from the advertising archive server 106 to the programming management server 102.

The programming management server 102 creates a new play list for displaying the advertising contents Cm1, Cm2, ..., Cmi in each unit time slot. In this case, the programming management server 102 arranges for the advertising contents Cm1, Cm2, ..., Cmi to be displayed in a vacant time or in a time for interchangeable nonpreferential contents among a plurality of short time slots in the unit time slot.

The distribution sever 103 distributes the new play list and the additional advertising contents Cm1, Cm2, ..., Cmi to the set-top box (not shown) of the display device 105. Based on the new play list, the set-top box reproduces the advertising contents one after another for display on the display device 105. In this manner, the newly added advertising contents Cm1, Cm2, ..., Cmi are also displayed in the unit time slot.

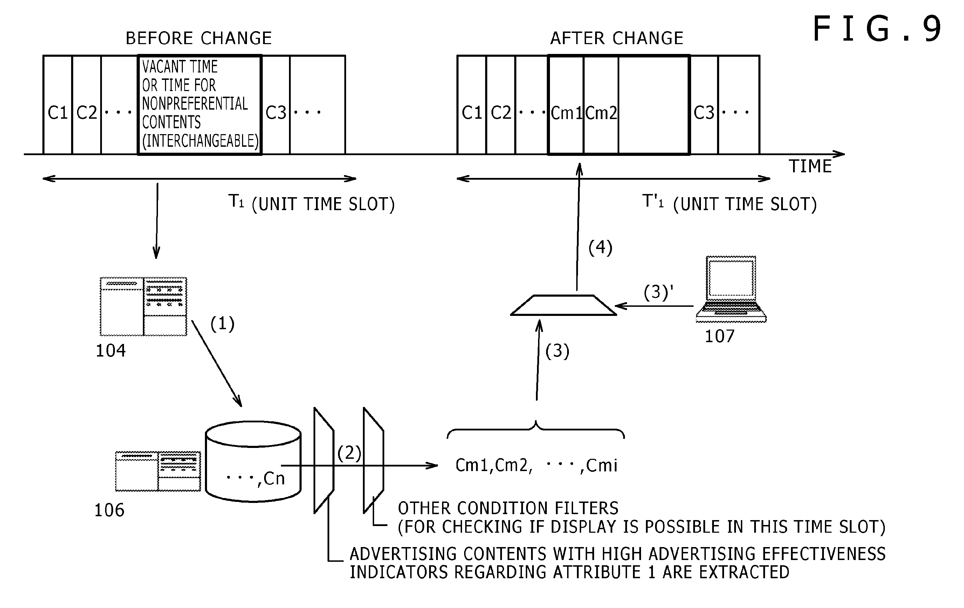

Fig. 9 summarizes the above-described series of steps in which effective advertising contents are automatically selected and displayed in the unit time slot on the basis of the advertising effectiveness indicator calculated by the recognition rate calculation server 104 for each product in the unit time slot.

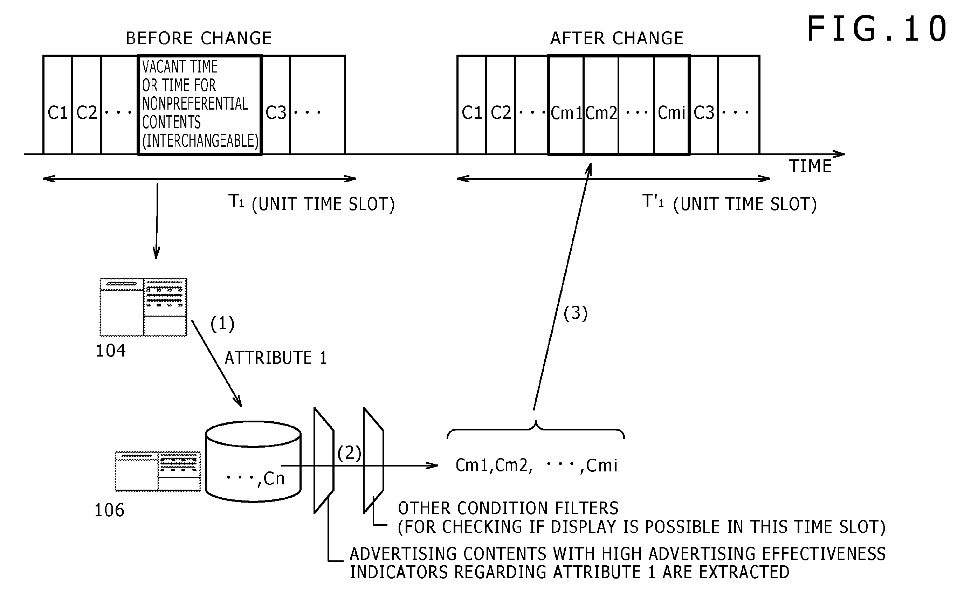

In the foregoing description, the user was shown using the content selection terminal 107 to select desired advertising contents from a certain number of advertising contents ultimately left to be displayed following the filtering by the other condition filters. Alternatively, where the user's selection process is not carried out, the advertising contents ultimately left intact following the filtering by the other condition filters may be transmitted unmodified to the programming management server 102 as the advertising contents Cm1, Cm2, ..., Cmi to be displayed. Fig. 10 summarizes a series of steps to be performed the alternative case above.

In the system configuration of Fig. 7, as described above, the recognition rate calculation server 104 of the signage system 100 calculates the advertising effectiveness indicator of each product in a predetermined unit time slot, calculates the advertising effectiveness indicator per product attribute, and selects one effective attribute. The advertising contents corresponding to the selected attribute are extracted from the advertising archive server 106 and transmitted to the programming management server 102 as the advertising contents to be added (i.e., targeted to be displayed). This makes it possible to perform advertising effectively by taking advantage of, say, a vacant time in the display unit time slot.

<4. Variations>

In the foregoing description, the signage system 100 was shown furnished with the distribution server 103, recognition rate calculation server 104, and other components separately in addition to the programming management server 102. Alternatively, part or all of these components may be implemented by use of a single computer.

As a variation of the first embodiment, the advertising effectiveness indicators calculated by the recognition rate calculation serer 104 of the signage system 100 may be transmitted to and displayed on the input terminal 101.

The present disclosure may be applied advantageously to electronic advertisement display systems for displaying advertising contents using display devices, among others.

The present disclosure contains subject matter related to that disclosed in Japanese Priority Patent Application JP 2010-143513 filed in the Japan Patent Office on June 24, 2010.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An advertising effectiveness measuring apparatus, comprising:

   a display information acquisition portion configured to acquire display information representing whether or not an advertising content of a predetermined product was displayed in each of unit time slots;
   a purchaser information acquisition portion configured to acquire purchaser information representing the number of purchasers who bought said predetermined product in each of said unit time slots; and
   an indicator calculation portion configured to calculate an advertising effectiveness indicator representing the effectiveness of the advertising carried out by displaying said advertising content of said predetermined product, based on said display information acquired by said display information acquisition portion and on said purchaser information acquired by said purchaser information acquisition portion.

2. The advertising effectiveness measuring apparatus according to claim 1, wherein said indicator calculation portion calculates as said advertising effectiveness indicator the difference between an average of the number of purchasers in each of said unit time slots in which said advertising content of said predetermined product was displayed on the one hand, and an average of the number of purchasers in each of said unit time slots in which said advertising content of said predetermined product was not displayed on the other hand.

3. The advertising effectiveness measuring apparatus according to claim 1, further comprising
   an attribute information acquisition portion configured to acquire attribute information about said purchasers who bought said predetermined product; wherein
   said indicator calculation portion calculates said advertising effectiveness indicator regarding a predetermined attribute of said purchasers based on said attribute information acquired by said attribute information acquisition portion.

4. The advertising effectiveness measuring apparatus according to claim 1, wherein
   said display information acquisition portion acquires the display information about the advertising contents for a plurality of products that share the same unit time slot in which said advertising contents are displayed;
   said purchaser information acquisition portion acquires as said purchaser information the information about the purchasers who bought said plurality of products; and
   based on said display information acquired by said display information acquisition portion regarding said plurality of products and on said purchaser information acquired by said purchaser information acquisition portion regarding said plurality of products, said indicator calculation portion calculates said advertising effectiveness indicator for each of said plurality of products, before calculating an average of the calculated advertising effectiveness indicators regarding said plurality of products.

5. The advertising effectiveness measuring apparatus according to claim 4, wherein, if there is a difference in display time between the advertising contents for said plurality of products, said indicator calculation portion acquires as said average a weighted average by weighting the advertising effectiveness indicator regarding each of said plurality of products in accordance with the display time of the advertising content for the product in question.

6. An advertising effectiveness measuring method, comprising:

   acquiring display information representing whether or not an advertising content of a predetermined product was displayed in each of unit time slots;
   acquiring purchaser information representing the number of purchasers who bought said predetermined product in each of said unit time slots; and
   calculating an advertising effectiveness indicator representing the effectiveness of the advertising carried out by displaying said advertising content of said predetermined product, based on the acquired display information and on the acquired purchaser information.

7. A program for causing a computer to function as:

a display information acquisition section configured to acquire display information representing whether or not an advertising content of a predetermined product was displayed in each of unit time slots;

a purchaser information acquisition section configured to acquire purchaser information representing the number of purchasers who bought said predetermined product in each of said unit time slots; and

an indicator calculation section configured to calculate an advertising effectiveness indicator representing the effectiveness of the advertising carried out by displaying said advertising content of said predetermined product, based on said display information acquired by said display information acquisition section and on said purchaser information acquired by said purchaser information acquisition section.

8. An electronic advertising apparatus, comprising:

a display control block configured to display an advertising content of a predetermined product in a predetermined time slot; and

an advertising effectiveness measurement block configured to acquire an advertising effectiveness indicator representing the effectiveness of the advertising carried out by displaying said advertising content of said predetermined product; wherein

said advertising effectiveness measurement block includes

a display information acquisition portion configured to acquire display information representing whether or not an advertising content of a predetermined product was displayed in each of short time slots making up each of unit time slots constituting said predetermined time slot,

a purchaser information acquisition portion configured to acquire purchaser information representing the number of purchasers who bought said predetermined product in each of said short time slots, and

an indicator calculation portion configured to calculate the advertising effectiveness indicator representing the effectiveness of the advertising carried out by displaying said advertising content of said predetermined product, with regard to each of said unit time slots constituting said predetermined time slot on the basis of said display information acquired by said display information acquisition portion and said purchaser information acquired by said purchaser information acquisition portion, and

said display control block controls the number of times said advertising content of said product is displayed in each of said unit time slots, with regard to either said predetermined time slot or a time slot corresponding to said predetermined time slot on the basis of said advertising effectiveness indicator acquired by said advertising effectiveness measurement block.

9. An electronic advertising apparatus, comprising:

a display control block configured to display advertising contents of a plurality of products in a predetermined unit time slot; and

an advertising effectiveness measurement block configured to acquire for each of said products an advertising effectiveness indicator representing the effectiveness of the advertising carried out by displaying said advertising contents; wherein

said advertising effectiveness measurement block includes

a display information acquisition portion configured to acquire display information representing whether or not said advertising contents of said plurality of products were displayed in each of unit time slots,

a purchaser information acquisition portion configured to acquire purchaser information representing the number of purchasers who bought said plurality of products in each of said unit time slots, and

an indicator calculation portion configured to calculate the advertising effectiveness indicator representing the effectiveness of the advertising carried out by displaying said advertising contents, with regard to each of said products on the basis of said display information acquired by said display information acquisition portion and said purchaser information acquired by said purchaser information acquisition portion, said indicator calculation portion further calculating the advertising effectiveness indicator for each of attributes of said products based on the advertising effectiveness indicator regarding each of said products,

said electronic advertising apparatus further includes an advertising content recording block configured to record a predetermined number of advertising contents, and

said display control block displays a predetermined number of advertising contents which correspond to a predetermined product attribute and which are extracted from said advertising content recording block based on the advertising effectiveness indicator acquired by said advertising effectiveness measurement block regarding each of the product attributes, said predetermined number of advertising contents being displayed in said unit time slot in which said advertising contents of said plurality of products are to be displayed.

**10.** The electronic advertising apparatus according to claim 9, further comprising
a user selection block configured to select desired advertising contents from said predetermined number of advertising contents extracted by said display control block from said advertising content recording block; wherein
said display control block displays the advertising contents selected by said user selection block in said unit time slot in which said advertising contents of said plurality of products are to be displayed.

F I G . 1

EP 2 400 451 A1

# FIG.2

2010/3/1(MON)
0:00

2010/3/2(TUE)
0:00

2010/3/3(WED)
0:00

2010/3/4(THU)
0:00

2010/3/5(FRI)
0:00

TIME

| DISPLAY STATUS | ON | OFF | ON | OFF | |

| NUMBER OF PURCHASERS | $a_1$ | $b_1$ | $a_2$ | $b_2$ | |

$Ta_1$　　　　$Tb_1$　　　　$Ta_2$　　　　$Tb_2$

$$R_a = \frac{a_1 + a_2 + \cdots}{Ta_1 + Ta_2 + \cdots} \quad , \quad R_b = \frac{b_1 + b_2 + \cdots}{Tb_1 + Tb_2 + \cdots}$$

# F I G . 3

$$R'_a = \frac{a'_1 + a'_2 + \cdots}{Ta_1 + Ta_2 + \cdots} \quad , \quad R'_b = \frac{b'_1 + b'_2 + \cdots}{Tb_1 + Tb_2 + \cdots}$$

$$R''_a = \frac{a''_1 + a''_2 + \cdots}{Ta_1 + Ta_2 + \cdots} \quad , \quad R''_b = \frac{b''_1 + b''_2 + \cdots}{Tb_1 + Tb_2 + \cdots}$$

# FIG.4

100

101

INPUT
INFORMATION

105

102

103

DISPLAY
INFORMATION
(PER PRODUCT ID)

104

PROGRAM
INFORMATION

ADVERTISING
EFFECTIVENESS
INDICATOR

200

202

201

¥1,192

SALES INFORMATION

300

301

CUSTOMER ATTRIBUTE
INFORMATION

EP 2 400 451 A1

F I G . 5 A

F I G . 5 B

# FIG.6

| | | 105 DISPLAY DEVICE | 102 PROGRAMMING MANAGEMENT SERVER | 104 RECOGNITION RATE CALCULATION SERVER | 200 POS SYSTEM |
|---|---|---|---|---|---|

DISPLAY COUNT OF $P_0$     DISPLAY COUNT OF $P_1$

$R_0$    $R_1$      $P_0$    $P_1$

$T_0$   $\Delta t_0$     0      0

REPRODUCTION COUNT $M_{P0(1)}$    REPRODUCTION COUNT $M_{P1(1)}$

NUMBER OF $P_0$ PURCHASERS    NUMBER OF $P_1$ PURCHASERS

$\Delta t_1$

$R_0$ AND $R_1$ COMPUTED AND PREFERENTIALLY DISPLAYED PRODUCTS SELECTED

$T_1$

INSTRUCTION GIVEN TO INCREASE DISPLAY COUNT OF $P_0$

NEW PROGRAMMING CREATED

NEW PROGRAMMING DISTRIBUTED

$\Delta t_2$   REPRODUCTION COUNT $M_{P0(2)}$ (HIGHER THAN $M_{P0(1)}$)    REPRODUCTION COUNT $M_{P1(2)}$

EP 2 400 451 A1

FIG.7

EP 2 400 451 A1

# FIG.8

**106** ADVERTISING ARCHIVE SERVER

OTHER CONDITION FILTERS (FOR CHECKING IF DISPLAY IS POSSIBLE IN THIS TIME SLOT)

**104** RECOGNITION RATE CALCULATION SERVER

**102** PROGRAMMING MANAGEMENT SERVER

CALCULATE INDICATORS R1, ..., Rj FOR PRODUCTS 1, ..., j — ST1

CALCULATE INDICATORS R1, ..., Rj FOR ATTRIBUTES 1, ..., i — ST2

FROM ATTRIBUTES 1, ..., i, SELECT ONE THAT PROVED EFFECTIVE (E.G., ATTRIBUTE 1) — ST3

T₁

ATTRIBUTE 1

SELECT ADVERTISING CONTENTS WITH ATTRIBUTE 1 — ST4

**107** CONTENT SELECTION TERMINAL

VERIFY CONDITIONS INCLUDING POSSIBILITY OF DISPLAY — ST5

ADD Cm1, Cm2, ..., Cmi

LET USER SELECT

ST6

UPDATE PROGRAMMING IN THE NEXT TIME SLOT T'1 HAVING THE SAME ATTRIBUTE — ST7

T'₁

EP 2 400 451 A1

# FIG.9

**BEFORE CHANGE**

| C1 | C2 | $\cdots$ | VACANT TIME OR TIME FOR NONPREFERENTIAL CONTENTS (INTERCHANGEABLE) | C3 | $\cdots$ |

$T_1$ (UNIT TIME SLOT)

**AFTER CHANGE**

| C1 | C2 | $\cdots$ | Cm1 | Cm2 | | C3 | $\cdots$ |

TIME

$T'_1$ (UNIT TIME SLOT)

(1)

104

106

$\cdots, Cn$

(2) $\rightarrow$ Cm1, Cm2, $\cdots$, Cmi

OTHER CONDITION FILTERS
(FOR CHECKING IF DISPLAY IS POSSIBLE IN THIS TIME SLOT)

ADVERTISING CONTENTS WITH HIGH ADVERTISING EFFECTIVENESS
INDICATORS REGARDING ATTRIBUTE 1 ARE EXTRACTED

(3)

(3)'

(4)

107

EP 2 400 451 A1

# FIG.10

BEFORE CHANGE

| C1 | C2 | $\cdots$ | VACANT TIME OR TIME FOR NONPREFERENTIAL CONTENTS (INTERCHANGEABLE) | C3 | $\cdots$ |

$\longleftrightarrow$

$T_1$ (UNIT TIME SLOT)

AFTER CHANGE

| C1 | C2 | $\cdots$ | Cm1 | Cm2 | $\cdots$ | Cmi | C3 | $\cdots$ |

$\longleftrightarrow$ TIME

$T'_1$ (UNIT TIME SLOT)

104

(1)

ATTRIBUTE 1

(3)

106

$\cdots$, Cn

(2)

Cm1, Cm2, $\cdots$, Cmi

OTHER CONDITION FILTERS
(FOR CHECKING IF DISPLAY IS POSSIBLE IN THIS TIME SLOT)

ADVERTISING CONTENTS WITH HIGH ADVERTISING EFFECTIVENESS
INDICATORS REGARDING ATTRIBUTE 1 ARE EXTRACTED

EP 2 400 451 A1

Europäisches
Patentamt

European
Patent Office

Office européen
des brevets

## EUROPEAN SEARCH REPORT

**Application Number**

EP 11 16 8602

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-10 | INV.<br>G06Q30/00<br><br><br><br><br><br>TECHNICAL FIELDS SEARCHED (IPC)<br><br>G06Q |

The present search report has been drawn up for all claims

| Place of search | Date of completion of the search | Examiner |
|---|---|---|
| The Hague | 8 September 2011 | Berlea, Alexandru |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

**EP 2 400 451 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000209578 A
- JP 2010143513 A